(19) Europäisches Patentamt
European Patent Office
Office européen des brevets

(11) **EP 1 960 171 B1**

(12) **EUROPÄISCHE PATENTSCHRIFT**

(45) Veröffentlichungstag und Bekanntmachung des Hinweises auf die Patenterteilung:
**07.07.2010   Patentblatt 2010/27**

(51) Int Cl.:
***B29B 7/76*** *(2006.01)*   ***B05B 15/02*** *(2006.01)*
***B05B 15/04*** *(2006.01)*

(21) Anmeldenummer: **06829112.9**

(22) Anmeldetag: **23.11.2006**

(86) Internationale Anmeldenummer:
**PCT/EP2006/011229**

(87) Internationale Veröffentlichungsnummer:
**WO 2007/065564 (14.06.2007 Gazette 2007/24)**

(54) **VERFAHREN UND VORRICHTUNG ZUR HERSTELLUNG VON BESCHICHTETEN FORMTEILEN**

METHOD AND DEVICE FOR THE PRODUCTION OF COATED MOLDED PIECES

PROCEDE ET DISPOSITIF POUR PRODUIRE DES PIECES MOULEES MUNIES D'UN REVETEMENT

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **07.12.2005   DE 102005058292**

(43) Veröffentlichungstag der Anmeldung:
**27.08.2008   Patentblatt 2008/35**

(73) Patentinhaber: **Hennecke GmbH**
**51379 Leverkusen (DE)**

(72) Erfinder:
• **WIRTH, Jürgen**
**51147 Köln (DE)**
• **BERGHAHN, Frank**
**53639 Königswinter (DE)**
• **PAWLIK, Wolfgang**
**50735 Köln (DE)**

(74) Vertreter: **Gosdin, Michael**
**Adam-Stegerwald-Strasse 6**
**97422 Schweinfurt (DE)**

(56) Entgegenhaltungen:
**DE-U1- 9 315 493     US-A1- 4 471 887**

**Beschreibung**

Die Erfindung betrifft ein Verfahren und eine Vorrichtung zur Herstellung von Formteilen enthaltend eine Schicht aus Polyurethan.

Wenn es darum geht, Reaktivkunststoff, z.B. Polyurethan, flächig auf ein Substrat aufzubringen, hat sich zumeist das Sprühen als Auftragstechnik durchgesetzt.

Im Kunststoff-Handbuch, Band 7 Polyurethane, 3. Auflage, 1993, herausgegeben im Carl Hauser Verlag, sind bezüglich solcher Sprühtechniken auf Substrate diverse Anwendungsbeispiele beschrieben: z.B. die Teppichrückenbeschichtung im Sprühverfahren (Kapitel 5.2.2.2). Hierbei wird zum Vermischen der Reaktivkomponenten ein Rührwerksmischkopf verwendet. Das fertige Reaktivgemisch wird über einen Schlauch zu einer klassischen Sprühdüse, ähnlich wie sie zum Sprühen von Lacken verwendet wird, geleitet, welche quer zu den kontinuierlich fortbewegten Substraten aus Teppichen traversiert und diese besprüht.

Die chemische Ausreaktion erfolgt anschließend durch thermische Aktivierung. Ein solches Verfahren ist jedoch nur möglich bei langsam reagierenden Reaktivgemischen. Bei schnell reagierenden Rohstoffsystemen würden sich Rührwerksmischer und Schlauch zusetzen und die Sprühdüse verstopfen.

Deshalb werden bei hochreaktiven Rohstoffsystemen, insbesondere im Schussbetrieb, wenn es darum geht, z.B. Hautelemente aus Reaktivkunststoff herzustellen, so genannte Hochdruckmischer mit miniaturisierten Mischkammern verwendet, denen dann spezielle Sprühdüsen nachgeschaltet sind. Ein Beispiel für solche Sprühsysteme wird in der EP 0 303 305 B1 beschrieben. Aufgrund der relativ schmalen und verwinkelten Kanäle im Sprühkopf neigen solche Systeme jedoch dazu, insbesondere bei hochreaktiven Rohstoffsystemen, mit der Zeit zu verstopfen und müssen deshalb von Zeit zu Zeit gereinigt werden. Abhilfe ist bei Produktionen mit hoher Taktfrequenz zwar möglich, indem man abwechselnd mit zwei Mischköpfen arbeitet. Dies macht jedoch einen erheblichen zusätzlichen Anlagenaufwand erforderlich.

In der DE 93 15 493 U1 werden ein Verfahren und eine Vorrichtung gemäß dem Oberbegriff des Anspruchs 7 zur Verarbeitung von Reaktivkunststoff offenbart. Hier kommt eine Mischkammer zum Einsatz, in der die Reaktivkomponenten des Kunststoffs vermischt werden. Das Reaktivgemisch wird über eine Auslassleitung ausgetragen. Das Reinigen der Vorrichtung erfolgt mittels Erzeugen eines Druckluftstrahls, der die Auslassleitung ausbläst.

Weitere wesentliche Kriterien für einen optimalen Sprühprozess sind leichte, vor allem auch klein bauende Sprühmischköpfe, die möglichst ohne oder zumindest mit minimierter Erzeugung von Aerosolen sprühen können.

Sprühmischköpfe im Schussbetrieb werden in der Regel von einem Roboter geführt, welcher extrem schnelle Bewegungen ausführen muss, so dass ein leichter Sprühmischkopf von großem Vorteil ist.

Bei dreidimensionalen Sprühschichten muss insbesondere bei engen Vertiefungen der Sprühmischkopf auch klein bauen, d.h. klein sein, um auch die Schrägen in diesen engen Vertiefungen erreichen zu können.

Beim Sprühen können neben den Sprühtröpfchen, die bestimmungsgemäß auf die zu beschichtende Oberfläche gelangen, auch Aerosole, d.h. Schwebeteilchen entstehen, die durch Thermik oder Zug auf umliegende Einrichtungen gelangen und diese verschmutzen. Auch eine gesundheitliche Gefährdung der Mitarbeiter ist dabei nicht auszuschließen. Deshalb müssen Aerosole durch aufwendige und teure Absaug- und Filteranlagen eliminiert werden. Aber nicht nur die zusätzlichen Kosten für die Investition solcher Anlagen sind hoch, denn die Anlagen müssen auch ständig gewartet werden, was einen hohen zusätzlichen Arbeitsaufwand zur Folge hat.

Weitere nicht zu vernachlässigende Nachteile entstehen durch die Rohstoffverluste selbst. Denn was an Aerosolen abgesaugt wird und in die Filteranlagen gelangt, ist für die eigentliche Produktion verloren.

Es bestand somit die Aufgabe, ein Verfahren und eine Vorrichtung zur Herstellung von Formteilen enthaltend eine Schicht aus Polyurethan im Schussbetrieb zu entwickeln: Die dafür eingesetzte Vorrichtung soll:

- klein und leicht bauend sein,

- einwandfrei vermischen können,

- sowie aerosolfrei, zumindest jedoch aerosolminimiert sprühen können,

- und im Betrieb eine Produktion ohne Unterbrechungen ermöglichen. Der Sprühmischkopf muss also nach jedem Schuss so reinigbar sein, dass keine Reste an Reaktivgemisch an irgendeiner Stelle des Sprühmischkopfs zurückbleiben.

Die Erfindung betrifft ein Verfahren zur Herstellung von Formteilen enthaltend eine Schicht aus Polyurethan im Schussbetrieb, bei dem

a) zunächst die Reaktivkomponenten in einer zylindrischen Mischkammer vermischt werden und

b) das so erzeugte Reaktivgemisch anschließend durch eine Eintrittsöffnung in einen Strömungskanal geleitet wird, und

c) im Bereich der Eintrittsöffnung zusätzlich ein Gasstrom in den Strömungskanal geleitet wird, und

d) das aus dem Strömungskanal austretende Reaktivgemisch auf die Oberfläche eines Substrats aufgesprüht wird und darauf aushärtet, und

e) nach Schussende die Mischkammer mechanisch mittels eines axial in der Mischkammer beweglichen Ausstoßers gereinigt wird, indem der Ausstoßer aus der Schussposition in die Reinigungsposition bewegt wird, und

f) der Ausstoßer anschließend in der Reinigungsposition solange gehalten wird, bis sowohl die Stirnseite des Ausstoßers als auch der Strömungskanal durch den Gasstrom gereinigt sind.

Bevorzugt ist die Eintrittsöffnung in den Strömungskanal im Wesentlichen unmittelbar hinter der Mischkammer angeordnet.

In dem erfindungsgemäßen Verfahren werden zunächst die Reaktivkomponenten in einer Mischkammer vermischt, indem sie z.B. durch Gegenstrominjektion gegeneinander verdüst werden. Anschließend wird das so entstandene Reaktivgemisch durch einen Strömungskanal geleitet. Im Eingangsbereich des Strömungskanals wird zusätzlich zu dem Massestrom aus Reaktivgemisch gleichzeitig ein Massestrom aus Gas, z.B. aus Luft, durch den Strömungskanal gedrückt. Das aus dem Strömungskanal austretende Reaktivgemisch wird anschließend auf die Oberfläche eines Substrats aufgesprüht und härtet darauf aus. Als Substrat können beispielsweise Fasermatten oder eine Kombination aus Fasermatten und Distanzkernen, wie Papierwaben, dienen um daraus mit der bzw. den Reaktivgemischschichten Verbundformteile bzw. Sandwichbauteile herzustellen. Das Substrat kann aber auch durch eine Werkzeugoberfläche gebildet werden um direkt ein Polyurethan Bauteil, z.B. eine Haut herzustellen. Nach Schussende wird die Mischkammer mechanisch mittels eines Ausstoßers, d.h. eines Reinigungskolbens, gereinigt. Anschließend wird der Ausstoßer in seiner Reinigungsposition so lange gehalten, bis sowohl die Stirnseite des Ausstoßers als auch der Strömungskanal gereinigt sind.

Mit dem beschriebenen Verfahren werden alle Kriterien für einen optimalen Sprüh-prozess erfüllt:

- Der Mischkopf ist aufgrund seiner zylindrischen Form einfach konstruiert und kann daher klein und leicht sein, so dass beim Sprühen z.B. mit einem Roboter schnelle Bewegungen und damit minimierte Taktzeiten möglich sind. Auf Grund seiner kleinen Bauform ist er aber auch wendig, so dass selbst bei komplizierten, dreidimensionalen Bauteilen ein homogener Gemischauftrag möglich ist, wobei geschlossene Sprühschichten mit definierter Schichtdicke entstehen.

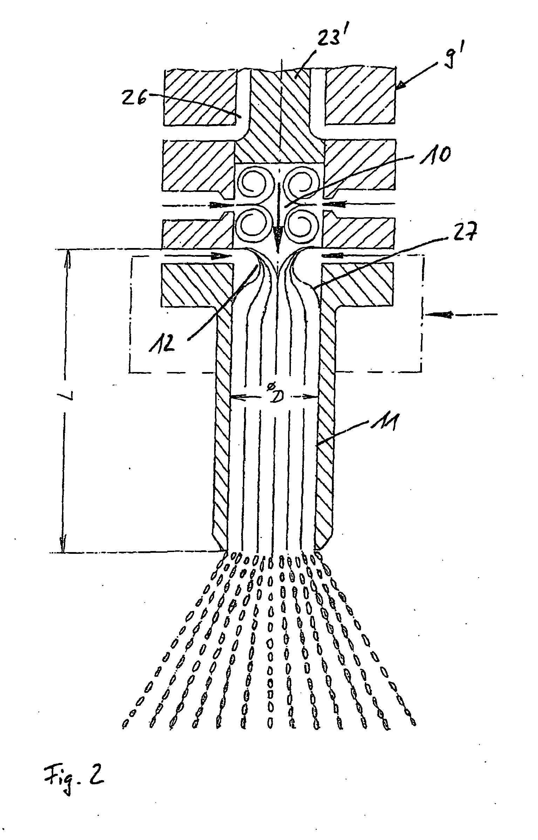

- Durch das Einbringen des Gasstroms im Eingangsbereich des Strömungskanals, d.h. in die Ebene unmittelbar unter der Mischzone, kann auf einfache Weise eine Kammerung der Mischkammer erfolgen. Dies ist beispielsweise in Figur 2 gezeigt. Das stellt auch sicher, dass die Reaktivkomponenten einwandfrei vermischt werden.

- Das Einbringen des Gasstroms im Eingangsbereich des Strömungskanals bewirkt nicht nur eine einwandfreie Mischqualität, es hat auch zur Folge, dass das Reaktivgemisch beim Verlassen des Strömungskanals in Tröpfchen zerfällt, wodurch ein Sprühen bewirkt wird. Dadurch kann auf den Einsatz einer zusätzlichen Sprühdüse verzichtet werden.

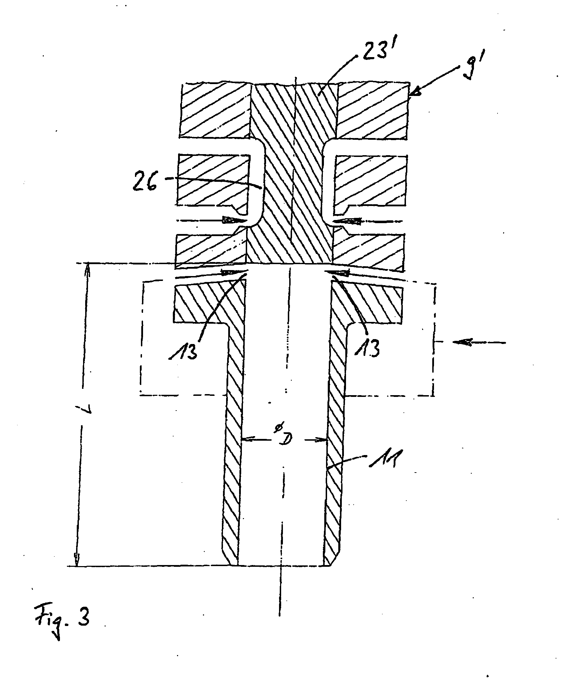

- Nach Schussende fährt der Ausstoßer nach vorne, wodurch die Mischkammer komplett von Reaktivgemisch gereinigt wird. Dies ist beispielsweise aus Figur 3 zu erkennen. Er verharrt dann für eine kurze Zeitspanne von bevorzugt 0,1 bis 10 s, bevorzugt 0,5 bis 5 s, in der vorderen Position (Reinigungsposition), während dessen die Gaszugabe bestehen bleibt, so dass sowohl die Stirnseite des Ausstoßers als auch der Strömungskanal durch den Gasstrom gereinigt werden. Diese Konfiguration ermöglicht minimale Reinigungszeiten und damit auch hohe Taktfrequenzen.

In einer bevorzugten Variante (Figur 3) ist die Gaseinströmung schräg gegen die Stirnseite des Ausstoßers gerichtet, was eine besonders gute Reinigung dieser kritischen Stelle bewirkt.

Die Gaseinströmung während des Reinigungsbetriebs erfolgt bevorzugt mit einer Geschwindigkeit von 50 m/s bis zu 250 m/s. Da der Gasverbrauch proportional zur Strömungsgeschwindigkeit ist, wird aus Kostengründen eine relativ niedrige Strömungsgeschwindigkeit von ca. 50 m/s angestrebt. Bei hochreaktiven Gemischen muss jedoch die Reinigungsgeschwindigkeit bis zu 250 m/s und damit auch die Gasmenge gesteigert werden, um den erforderlichen Reinigungseffekt sicher zustellen.

Zudem erfolgt der Reinigungsvorgang mit Gasspülung, insbesondere bei hochreaktiven Rohstoffsystemen, bevorzugt schnell und stoßartig, um den Reinigungsvorgang weiter zu beschleunigen.

Während des Produktionsbetriebs ist bevorzugt das Verhältnis zwischen Massestrom aus Gas $\dot{m}_G$ zum Massestrom aus Reaktivgemisch $\dot{m}_R$ einstellbar, und zwar bevorzugt im Verhältnis $\dot{m}_G/\dot{m}_R$ von zwischen 2:1 und 1:100. Dabei ergibt sich bei einem Verhältnis $\dot{m}_G/\dot{m}_R$ = 2:1, d.h. bei großer Gasmenge, ein Sprühbild mit relativ feinen Sprühtröpfchen und bei einem Verhältnis $\dot{m}_G/\dot{m}_R$ = 1:100, d.h. bei geringer Gasmenge, ein Sprühbild mit relativ groben Tropfen.

Feine Tropfen ergeben zwar eine sehr glatte Sprühoberfläche, erzeugen aber auch einen hohen Aerosolanteil, der wiederum einen erhöhten Absaugaufwand erforderlich macht. Grobe Tropfen erzeugen eine nicht so glatte Oberfläche, haben aber auch nur einen minimalen Aerosolanteil. Der Fachmann kann in einfachen Vorversuchen für das eingesetzte System (Substrat, Reaktivkomponenten) das jeweilige Optimum zwischen diesen Extremen finden.

In der weiteren bevorzugten Ausgestaltung des neuen Verfahrens ist das Verhältnis $\dot{m}_G/\dot{m}_R$ auch regelbar. Dabei kann als Regelgröße die Form des Sprühbilds, d.h. die Breite B der erzeugten Sprühbahn und die Breite B', welche den Teil der erzeugten Sprühbahn mit gleicher Schichtdicke kennzeichnet, dienen.

Eine wesentliche Einflussgröße für das Sprühverhalten ist auch das Durchmesser-LängenVerhältnis D/L des der Mischkammer nachgeschalteten Strömungskanals, wobei bevorzugt ein D/L-Verhältnis von zwischen 1:1 und 1:50 eingestellt wird. Ein D/L-Verhältnis von ca. 1:1 führt zu relativ feinen Sprühtröpfchen, während ein D/L-Verhältnis von ca. 1:50 relativ grobe Sprühtropfen bewirkt.

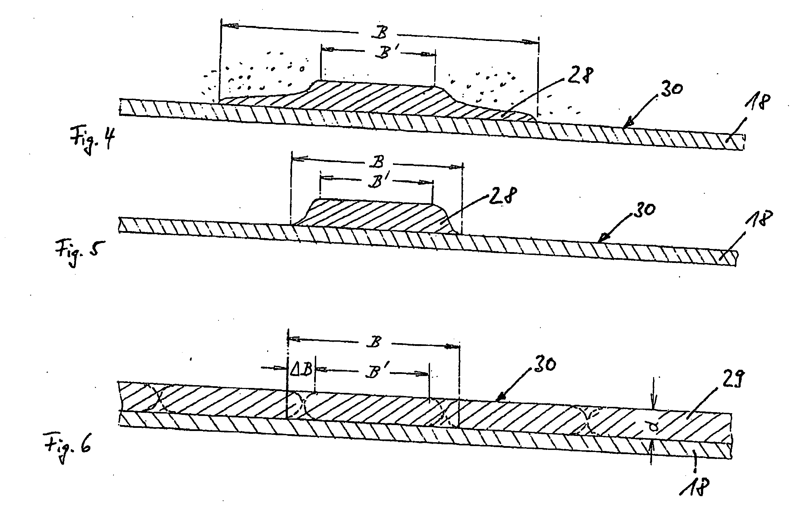

Die Kombination der beiden Maßnahmen, nämlich der Wahl eines optimalen D/L-Verhältnisses und der Einstellung bzw. Regelung des $\dot{m}_G/\dot{m}_R$-Verhältnisses liefert ein sehr breites Spektrum an Produktionsbedingungen, durch welches einerseits eine einwandfreie Mischqualität sichergestellt und andererseits ein Sprühbild mit minimiertem Aerosolanteil (siehe Figur 5) erzeugt werden kann.

Zur Einstellung optimaler Produktionsbedingungen kann der Fachmann bevorzugt wie folgt vorgehen:

Für das D/L-Verhältnis wird zunächst eine mittlere Größe von z.B. 1:20 gewählt. Anschließend wird der Gasmassestrom $\dot{m}_G$ von einem kleinen Gasstrom ausgehend hochgefahren, bis die Mischqualität einwandfrei ist. Danach wird der Gasmassestrom $\dot{m}_G$ weiter erhöht, um auch das Sprühbild zu optimieren, d.h. ein Sprühbild ohne Aerosole, zumindest jedoch ein Sprühbild mit minimiertem Aerosolanteil einzustellen.

Ist nach diesem ersten Vorgehen das gewünschte Sprühbild nicht optimal, muss in einem weiteren Iterationsschritt das D/L-Verhältnis korrigiert werden, und zwar bei zu feinen Sprühtropfen muss das D/L-Verhältnis erhöht und bei zu groben Sprühtropfen abgesenkt werden.

Es ist selbstverständlich, dass dieses iterative Vorgehen je Anwendungsfall im Allgemeinen nur einmalig und nicht immer wieder bei jedem Produktionsstart neu erfolgen muss.

Die Minimierung des Aerosolanteils ermöglicht nicht nur einen minimierten Absaugaufwand sowie minimierte Rohstoffverluste, sondern sie liefert auch einen weiteren, ganz wesentlichen Vorteil:

Ein Sprühen mit minimiertem Aerosolanteil ermöglicht nämlich auch Sprühaufträge mit einem minimierten Aerosol-Saum. Das wiederum hat zur Folge, dass der Sprühauftrag im wesentlichen einlagig, d.h. in einem Durchgang erfolgen kann, wobei benachbarte Bahnen bevorzugt einen Überlappungsgrad von ca. 1 % bis 40 %, besonders bevorzugt von 3 % bis 30 %, ganz besonders bevorzugt von 5 % bis 20 % der pro Bahn besprühten Fläche haben können. D.h. die Breite der Überlappung zweier benachbarter Sprühbahnen der Breite B beträgt bevorzugt 1 bis 40% der Breite B einer Sprühbahn. Bei einem Überlappungsgrad von ca. 1 % kann sich zwischen den Sprühbahnen eine geringe Senke bilden, da im Randbereich der Bahnen im Allgemeinen die aufgesprühte Menge an Reaktivgemisch geringer ist als in der Mitte. Durch Verfließen des noch relativ flüssigen Reaktivgemisches egalisiert sich jedoch diese Senke. Bei einem Überlappungsgrad von ca. 40 % kann sich im Überlappungsbereich der Sprühbahnen eine geringe Erhebung bilden, die sich ebenfalls durch Verfließen des noch relativ flüssigen Reaktivgemisches egalisiert.

Je reaktiver das Gemisch ist, umso exakter muss der Grad der Überlappung eingestellt werden, um eine völlig ebene Oberfläche zu erhalten, weil für das Verfließen weniger oder kaum noch Zeit vorhanden ist. Ansonsten müssen geringe Unebenheiten in Kauf genommen werden.

Generell gilt aber, dass ein einlagiger Sprühauftrag gegenüber einem mehrlagigen Sprühauftrag große Vorteile hat.

Zunächst einmal ergibt sich bei dem einlagigen Sprühauftrag eine Reduzierung der Sprühzeit und damit für die Produktion eine höhere mögliche Taktfrequenz. Weiterhin ist es dann möglich, stärker reaktive Rohstoffsysteme einzusetzen. Das ergibt wiederum einen Zeitgewinn, da sich dadurch kürzere Aushärtezeiten ergeben. Denn bei mehrlagigem Sprühauftrag muss die chemische Reaktion des Rohstoffsystems wesentlich langsamer ablaufen, um zwischen den einzelnen Lagen eine einwandfreie "Nass in Nass"-Verbindung herstellen zu können. Bei höher reaktiven Rohstoffsystemen ergibt sich aber auch dadurch ein Qualitätsvorteil, dass insbesondere bei dreidimensionalen Sprühschichten ein Abfließen an den Schrägen vermieden werden kann, was bei langsam reagierenden Gemischen nicht möglich ist.

Die Erfindung betrifft auch eine Vorrichtung zur Herstellung von Formteilen enthaltend eine Schicht aus Polyurethan, enthaltend

a) Vorratsbehälter und Dosieraggregate für die Reaktivkomponenten, und

b) ein Mischorgan enthaltend eine zylindrische Mischkammer und einen axial in der Mischkammer beweglichen Ausstoßer, und

c) Verbindungsleitungen von den Dosieraggregaten in die Mischkammer, und

d) einen mit der Mischkammer hydraulisch über eine Eintrittsöffnung verbundenen Strömungskanal, dessen Durchmesser zu Längen - Verhältnis D/L 1:1 bis 1:50 beträgt, und

e) wenigstens eine Einlassöffnung für die Zuleitung eines Gasstroms in das in der Mischkammer erzeugte Reaktivgemisch, die im Strömungskanal im Bereich der Eintrittsöffnung angeordnet ist.

Bevorzugt ist die Eintrittsöffnung in den Strömungskanal, durch welche das Reaktivgemisch von der Mischkammer in den Strömungskanal fließt, im Wesentlichen unmittelbar hinter der Mischkammer angeordnet. Die Anzahl der Einlassöffnungen für die Zufuhr des Gasstroms variiert bevorzugt zwischen zwei bis zwanzig. Zwei Einlassöffnungen für die Zufuhr des Gasstroms haben zwar niedrigere Fertigungskosten als zwanzig Einlassöffnungen, dafür bewirken zwanzig Einlassöffnungen aber eine wesentlich bessere Kammerung der Mischzone und damit auch der Mischqualität. Auch das Sprühverhalten des Mischkopfes sowie die Reinigung der Stirnseite des Ausstoßers und des Strömungskanals sind bei zwanzig Einlassöffnungen für die Zufuhr des Gasstroms deutlich besser als bei zwei Eintrittsöffnungen.

In einer bevorzugten Ausgestaltung der Vorrichtung ist die Querschnittsfläche des Strömungskanals kleiner als die Querschnittsfläche der Mischkammer. Damit kann Einfluss genommen werden auf das Mischverhalten in der Mischkammer, weil dadurch die Kammerung der Mischzone durch die Zugabe von Gas noch zusätzlich unterstützt wird. Nachteilig dabei ist dann allerdings, dass sich die Bandbreite des einstellbaren Sprühtropfenspektrums reduziert, so dass ein Verhältnis von Mischkammerquerschnitt zu Strömungskanalquerschnitt von beispielsweise 10 nur bei extrem schwer vermischbaren Rohstoffsystemen sinnvoll ist.

Der nachteilige Effekt einer Querschnittsverkleinerung des Strömungskanals gegenüber dem Mischkammerquerschnitt kann teilweise kompensiert werden, wenn der Übergang von der Mischkammer zum Strömungskanal konisch ist, insbesondere dann, wenn sich die Konizität über der ganzen Länge des Strömungskanals erstreckt.

Bevorzugt ist der der Mischzone nachgeordnete Strömungskanal auswechselbar.

Um den Massenstrom des Gases einstellen zu können, ist in der Gaszuleitung bevorzugt ein Stellorgan, beispielsweise ein Stellventil, integriert.

In einer weiteren bevorzugten Ausgestaltung der Vorrichtung ist es auch möglich, das Sprühbild mittels eines Sensors zu erfassen. Als Sensor kommen dabei in erster Linie optische Geräte in Frage, z.B. solche mit einer Auflicht-Reflexionsmessung oder solche mit einer Farb- bzw. Hell-Dunkel-Erfassung.

Mit einem Stellorgan für den Gasmassestrom $\dot{m}_G$ sowie einem Sensor für die Erfassung des Sprühbilds und einer diesen beiden Organen übergeordneten Regeleinrichtung ist es möglich, das Sprühbild und damit den Sprühprozess optimal während der laufenden Produktion zu regeln.

Die Erfindung wird anhand der folgenden Abbildungen näher erläutert.

Figur 1    zeigt ein Schema einer erfindungsgemäßen Vorrichtung zur Durchführung des erfindungsgemäßen Verfahrens.

Fig. 2    zeigt einen Bestandteil der erfindungsgemäßen Vorrichtung, den Sprühmischkopf, in Schussposition.

Fig. 3    zeigt einen Bestandteil der erfindungsgemäßen Vorrichtung, den Sprühmischkopf, in Reinigungsposition.

Fig. 4    zeigt schematisch eine einzelne Sprühbahn mit breitem Aerosol-Saum.

Fig. 5    zeigt schematisch eine einzelne Sprühbahn mit schmalem Aerosol-Saum.

Fig. 6    zeigt schematisch einen einlagigen Sprühauftrag, der aus einzelnen Sprühbahnen mit schmalem Aerosol-Saum (wie in Figur 5 dargestellt) aufgebaut ist.

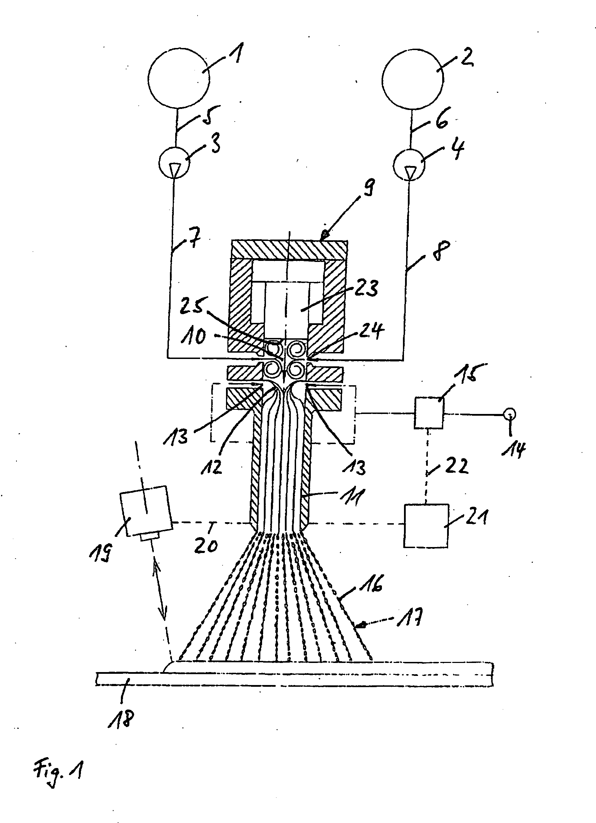

Figur 1 zeigt ein vereinfachtes Schema einer erfindungsgemäßen Vorrichtung zur Durchführung des erfindungsgemäßen Verfahrens. Dabei werden die Reaktivkomponenten Polyol und Isocyanat aus Vorratsbehältern 1, 2 mittels Dosieraggregaten, z.B. Dosierpumpen 3, 4 über Saugleitungen 5, 6 und Druckleitungen 7, 8 zum Hochdruck-Sprühmischkopf 9 gefördert, wo sie mittels Gegenstrominjektion gegeneinander gedüst und dadurch vermischt werden. Unmittelbar hinter der Mischkammer 10, welche die Mischzone bildet, schließt sich ein Strömungskanal 11 an. Im Bereich der Eintrittsöffnung 12 in den Strömungskanal 11 sind Einlassöffnungen 13 für die Zuleitung eines Gasstroms angeordnet, durch welche Gas, z.B. Luft, eingeblasen wird. Auf diese Weise wird das aus der Mischkammer 10 abströmende Reaktivgemisch eingeschnürt. Dadurch erfolgt eine so genannte Kammerung der Mischzone, so dass die Reaktivkomponenten einwandfrei miteinander vermischt werden.

Das Gas wird von einer Gasquelle 14 über ein Regelventil 15 mittels Gasleitungen zu den Einlassöffnungen 13 für die Zufuhr des Gasstroms gefördert. Das Reaktivgemisch und der Gasstrom fließen anschließend gemeinsam durch den der Mischkammer 10 in Strömungsrichtung nachgeschalteten Strömungskanal 11.

Nach Austritt aus dem Strömungskanal 11 zerfällt das Reaktivgemisch in einzelne Tröpfchen 16, während das Gas in die umgebende Atmosphäre entweicht, wobei es expandiert und dabei den Gemischsprühstrahl 17 aufweitet. Der Sprühstrahl 17 wird auf das Substrat 18 Bahn für Bahn aufgesprüht, wodurch eine homogene Sprühschicht entsteht.

Ein Sensor 19 erfasst von der Seite das so genannte Sprühbild und überträgt die ermittelten Daten über die korrespondierende Impulsleitung 20 zum Regelgerät 21. Weicht das ermittelte Sprühbild von einem Sollwert ab, so kann mittels des Regelventils 15 die Gasmenge entsprechend geändert werden. Hierzu ist im Regelgerät 21 zum Vergleich ein Referenz-Sprühbild hinterlegt. Die erforderliche Änderung wird dann über die dazugehörige Impulsleitung 22 zwischen Regelgerät 21 und Regelventil 15 übermittelt.

In das Regelgerät 21 können bevorzugt auch die Daten, d.h. die Durchflussmengen der Dosieraggregate 3, 5 eingespeist werden. (Die dafür erforderlichen Impulsleitungen sind in Figur 1 nicht dargestellt.) Das ist sinnvoll, da für verschiedene Austragsmengen auch unterschiedliche Sprühbilder hinterlegt sein müssen.

Unmittelbar nach Schussende fährt der Ausstoßer 23 (ein in der Mischkammer 10 axial beweglicher Reinigungskolben) nach unten, verschließt die Düsen 24 für die Verdüsung der Reaktivkomponenten in die Mischkammer 10 und reinigt gleichzeitig die Mischkammer 10 vom. Reaktivgemisch.

In dem Beispiel in Figur 1 kann der Massenstrom des Gases von Produktionsbetrieb auf Reinigungsbetrieb umgesteuert werden, wobei das Regelventil 15 dann weiter öffnet, und dadurch die für die Reinigung der Stirnseite 25 des Ausstoßers 23 und des Strömungskanals 11 erforderliche Gasmenge durchlässt. Nach erfolgter Reinigung wird der Ausstoßer 23 wieder nach oben gefahren und das Regelventil 15 wieder auf Produktionsbetrieb umgesteuert, so dass anschließend der nächste Schuss erfolgen kann.

Figur 2 zeigt einen Bestandteil der erfindungsgemäßen Vorrichtung, den Hochdruck-Sprühmischkopf 9', in Schussposition. In Figur 2 soll die wesentliche Strahleinschnürung des Reaktivgemischs (dargestellt durch Stromlinien 27) verdeutlicht werden. Durch die Strahleinschnürung wird erreicht, dass der durchströmte Querschnitt des Reaktivgemischs aus der Mischkammer 10 im Bereich der Eintrittsöffnung 12 in den Strömungskanal 11 verengt ist, wodurch die Mischkammer 10 in diesem Bereich eine durch den Gasstrom bewirkte zusätzliche Begrenzung erhält.

Weiterhin ist in Figur 2 die Länge L und der Durchmesser D des Strömungskanals 11 gekennzeichnet. Der Sprühmischkopf 9' in Figur 2 unterscheidet sich von dem in Figur 1 gezeigten Sprühmischkopf 9 nur durch einen andersartigen ausgebildeten Ausstoßer 23', der in Figur 2 auch Steuernuten 26 beinhaltet, mit denen die Reaktivkomponenten Polyol und Isocyanat von Schussbetrieb (wie in Figur 2 dargestellt) auf Reinigungs- bzw. Rezirkulationsbetrieb (wie in Figur 3 dargestellt) umgesteuert werden können. Das hat den Vorteil, dass vor allem auch nach Pausenzeiten die Reaktivkomponenten stets in gleichbleibender Kondition, z.B. gleichbleibender Temperatur, anstehen. Um gleiches bei dem in Figur 1 gezeigten Hochdruck-Sprühmischkopf 9 zu erreichen, müssten dort die Leitungen separat temperiert werden, z.B. durch Begleitheizungen (in Figur 1 nicht dargestellt).

Die in der Mischkammer 10 schematisch eingezeichneten Spiralen sollen den Mischvorgang symbolisieren.

Figur 3 zeigt den gleichen Hochdruck-Sprühmischkopf 9' wie in Figur 2 dargestellt. In Figur 3 befindet sich der Hochdruck-Sprühmischkopf 9' allerdings in Reinigungsbetrieb, während dessen die Reaktivkomponenten durch die Steuernuten 26 rezirkulieren.

In der in Figur 3 gezeigten Ausführungsform sind die Einlassöffnungen 13 für die Zuleitung eines Gasstroms schräg gegen die Stirnseite des Ausstoßers 23' gerichtet, was eine besonders gute Reinigung dieser kritischen Stelle bewirkt und was vor allem bei Rohstoffsystemen sinnvoll ist, die stark kleben. Die Reinigung durch den Gasstrom erfolgt dabei insbesondere bei hochreaktiven Rohstoffsystemen bevorzugt schnell und stoßartig.

Figur 4 zeigt schematisch ein Formteil 30 bestehend aus einer Sprühbahn 28 mit breitem Aerosol-Saum, die auf einem Substrat 18 aufgebracht ist. Der breite Aerosol-Saum entsteht vor allem dann, wenn beim Sprühvorgang viele Aerosole entstehen. Die Sprühbahn 28 ist durch ihre Breite B gekennzeichnet. Die Breite B' kennzeichnet den Teil der Sprühbahn, der eine gleiche Schichtdicke aufweist und somit nicht zum Aerosol-Saum gehört. Die Auftragsrichtung für die in Figur 4 dargestellte Sprühbahn ist senkrecht zur Zeichnungsebene.

Figur 5 zeigt schematisch ein Formteil 30 bestehend aus einer Sprühbahn 28 mit schmalem Aerosol-Saum, die auf einem Substrat 18 aufgebracht ist. Der schmale Aerosol-Saum entsteht vor allem dann, wenn der Aerosol-Anteil während des Sprühvorgangs minimiert ist. In Figur 5 ist die Sprühbahn 28 wieder durch ihre Breite B gekennzeichnet. Die Breite B' kennzeichnet den Teil der Sprühbahn, der die gleiche Schichtdicke aufweist und somit nicht zum Aerosol-Saum gehört. Die Auftragsrichtung für die in Figur 5 dargestellte Sprühbahn ist senkrecht zur Zeichnungsebene.

Figur 6 zeigt schematisch ein Formteil 30 bestehend aus einer einlagigen Sprühschicht 29, die auf einem Substrat 18 aufgebracht ist. Die Sprühschicht 29 ist aus mehreren Sprühbahnen mit schmalem Aerosol-Saum (wie in Figur 5 dargestellt) aufgebaut. Bei optimaler Überlappung der Sprühbahnen ist eine nahezu ebene Oberfläche möglich. Das gelingt besonders gut bei minimierten oder schmalen Aerosol-Säumen. Neben der Sprühbahnbreite B ist auch die Breite B' gekennzeichnet, nämlich die Breite des mittleren Abschnitts der Sprühbahn mit gleicher Schichtdicke d. Als Überlappung $\Delta B$ zwischen zwei Sprühbahnen ergibt sich somit

$$\Delta B = \frac{B - B'}{2}$$

und als Überlappungsgrand in Prozent: $\frac{\Delta B}{B} \, 100 \quad \%.$

Die Dicke d ist im Schema vergrößert und die Breiten B sowie B' verkleinert dargestellt.

**Patentansprüche**

1. Verfahren zur Herstellung von Formteilen enthaltend eine Schicht aus Polyurethan im Schussbetrieb, bei dem

> a) zunächst die Reaktivkomponenten in einer zylindrischen Mischkammer (10) vermischt werden und
> b) das so erzeugte Reaktivgemisch anschließend durch eine Eintrittsöffnung (12) in einen Strömungskanal (11) geleitet wird, und
> c) im Bereich der Eintrittsöffnung (12) zusätzlich ein Gasstrom in den Strömungskanal (11) geleitet wird, und
> d) das aus dem Strömungskanal (11) austretende Reaktivgemisch auf die Oberfläche eines Substrats (18) aufgesprüht wird und darauf aushärtet, und
> e) nach Schussende die Mischkammer (10) mechanisch mittels eines axial in der Mischkammer (10) beweglichen Ausstoßers (23) gereinigt wird, indem der Ausstoßer (23) aus der Schussposition in die Reinigungsposition bewegt wird, und
> f) der Ausstoßer (23) anschließend in der Reinigungsposition solange gehalten wird, bis sowohl die Stirnseite (25) des Ausstoßers (23) als auch der Strömungskanal (11) durch den Gasstrom gereinigt sind.

2. Verfahren nach Anspruch 1, bei dem der Gasstrom mit einer Geschwindigkeit von 50 bis 250 m/s, bevorzugt von 75 bis 200 m/s, besonders bevorzugt von 100 bis 150 m/s in den Strömungskanal einströmt.

3. Verfahren nach Anspruch 1 oder 2, **dadurch gekennzeichnet, dass** das Verhältnis der Massenströme von Gas und Reaktivgemisch $\dot{m}_G/\dot{m}_R$ zwischen 2:1 und 1:100, bevorzugt zwischen 1:1 und 1:75, besonders bevorzugt zwischen 1:2 und 1:50 einstellbar ist.

4. Verfahren nach Anspruch 3, **dadurch gekennzeichnet, dass** das Verhältnis $\dot{m}_G/\dot{m}_R$ regelbar ist.

5. Verfahren nach einem der Ansprüche 1 bis 4, **dadurch gekennzeichnet, dass** der Strömungskanal ein Verhältnis von Durchmesser zu Länge von 1:1 bis 1:50, bevorzugt 1:2 bis 1:30, besonders bevorzugt 1:3 bis 1:10 aufweist.

6. Verfahren nach einem der Ansprüche 1 bis 5, **da-**

**durch gekennzeichnet, dass** der Sprühauftrag im wesentlichen einlagig erfolgt, wobei benachbarte Sprühbahnen einen Überlappungsgrad von 1 % bis 40 %, bevorzugt von 3 % bis 30 %, besonders bevorzugt von 5 % bis 20 % haben.

7. Vorrichtung zur Herstellung von beschichteten Formteilen enthaltend eine Schicht aus Polyurethan, enthaltend

> a) Vorratsbehälter (1, 2) und Dosieraggregate (3, 4) für die Reaktivkomponenten, und
> b) ein Mischorgan (9) enthaltend eine zylindrische Mischkammer (10) und einen axial in der Mischkammer (10) beweglichen Ausstoßer (23), und
> c) Verbindungsleitungen (7, 8) von den Dosieraggregaten (3, 4) in die Mischkammer (10), und
> d) einen mit der Mischkammer (10) hydraulisch über eine Eintrittsöffnung (12) verbundenen Strömungskanal (11), dessen Durchmesser zu Längen - Verhältnis D/L 1:1 bis 1:50 beträgt, **gekennzeichnet durch**
> e) wenigstens eine Einlassöffnung (13) für die Zuleitung eines Gasstroms in das in der Mischkammer (10) erzeugte Reaktivgemisch, die im Strömungskanal (11) im Bereich der Eintrittsöffnung (12) angeordnet ist.

8. Vorrichtung gemäß Anspruch 7, **dadurch gekennzeichnet, dass** die Eintrittsöffnung (12) in den Strömungskanal (11) im Wesentlichen unmittelbar hinter der Mischkammer (10) angeordnet ist.

9. Vorrichtung gemäß einem der Ansprüche 7 oder 8, **dadurch gekennzeichnet, dass** zwei bis zwanzig, vorzugsweise drei bis sechzehn, besonders bevorzugt vier bis acht Einlassöffnungen (13) für die Zuleitung eines Gasstroms im Strömungskanal (11) im Bereich der Eintrittsöffnung (12) angeordnet sind.

10. Vorrichtung gemäß einem der Ansprüche 7 bis 9, **dadurch gekennzeichnet, dass** das Verhältnis zwischen der Querschnittsfläche der Mischkammer (10) und der Querschnittsfläche des Strömungskanals (11) 1,05 bis 10, bevorzugt 1,1 bis 5, besonders bevorzugt 1,2 bis 2 beträgt.

11. Vorrichtung gemäß einem der Ansprüche 7 bis 10, **dadurch gekennzeichnet, dass** der Übergang von der Mischkammer (10) zum Strömungskanal (11) konisch ausgebildet ist.

12. Vorrichtung gemäß einem der Ansprüche 7 bis 11, **dadurch gekennzeichnet, dass** der Strömungskanal (11) über seiner ganzen Länge konisch ausgebildet ist.

**13.** Vorrichtung gemäß einem der Ansprüche 7 bis 12, **dadurch gekennzeichnet, dass** sie weiterhin ein Stellorgan (15) für die Veränderung des Mengenstroms an Gas enthält.

**14.** Vorrichtung gemäß einem der Ansprüche 7 bis 13, **dadurch gekennzeichnet, dass** sie weiterhin einen Sensor (19) für die Erfassung des Sprühbildes umfasst.

**15.** Vorrichtung gemäß einem der Ansprüche 7 bis 14, **dadurch gekennzeichnet, dass** sie weiterhin eine Regeleinrichtung (21) umfasst, mit der auf Basis des erfassten Sprühbildes der Mengenstrom an Gas geregelt wird.

**Claims**

**1.** Batch method for producing moldings comprising a layer of polyurethane comprising the steps

    a) at first mixing the reactive components in a cylindrical mixing chamber (10), and
    b) then guiding the produced reactive mixture through an admission opening (12) into a flow channel (11), and
    c) additionally guiding a stream of gas from the region of the admission opening (12) into the flow channel (11), and
    d) spraying the reactive mixture leaving the flow channel (11) onto the surface of a substrate (18) and allowing the reactive mixture on the surface of the substrate to cure, and
    e) mechanically cleaning the mixing chamber (10) by moving an ejector (23) which is movable axially in the mixing chamber (1) from batch position into cleaning position when spraying of the batch has been completed, and
    f) afterwards maintaining the ejector (23) in the cleaning position until both the end face (25) of the ejector (23) and the flow channel (11) have been cleaned by the stream of gas.

**2.** Method according to claim 1 in which the stream of gas flows into the flow channel at a rate of from 50 to 250 m/s, preferably at a rate of from 75 to 200 m/s, specifically preferred at a rate of from 100 to 150 m/s.

**3.** Method according to claims 1 or 2, **characterized in that** the ratio of the mass streams of gas and reactive mixture $\dot{m}_G / \dot{m}_R$ is adjustable between 2:1 and 1:100, preferably between 1:1 and 1:75, specifically preferred between 1:2 and 1:50.

**4.** Method according to claim 3, **characterized in that** the ratio $\dot{m}_G / \dot{m}_R$ is controllable.

**5.** Method according to one of claims 1 till 4, **characterized in that** the flow channel has a ratio of diameter to length of from 1:1 to 1:50, preferred from 1:2 to 1:30, specifically preferred from 1:3 to 1:10.

**6.** Method according to one of claims 1 till 5, **characterized in that** the reactive mixture is sprayed substantially in a single layer with adjacent sprayed strips having a degree of overlap of from 1 % to 40 %, preferred from 3 % to 30 %, specifically preferred from 5 % to 20 %.

**7.** Device for producing coated moldings comprising a layer of polyurethane which device comprises

    a) storage containers (1, 2) and metering units (3, 4) for the reactive components, and
    b) a mixing member (9) comprising a cylindrical mixing chamber (10) and an ejector (23) which is movable axially in the mixing chamber (10), and
    c) connecting lines (7, 8) from the metering units (3, 4) to the mixing chamber (10), and
    d) a flow channel (11) which is connected hydraulically to the mixing chamber (10) by means of an admission opening (12), which flow channel (11) has a diameter to length ratio (D/L) of from 1:1 to 1:50,
    **characterized in that**
    e) at least one inlet opening (13) in the flow channel (11) which is in the region of the admission opening (12) for supplying a stream of gas into the reactive mixture produced in the mixing chamber (10).

**8.** Device according to claim 7, **characterized in that** the admission opening (12) into the flow channel (11) is arranged substantially immediately behind the mixing chamber (10).

**9.** Device according to one of claims 7 or 8, **characterized in that** there are from two to twenty, preferably three to sixteen, specifically preferred four to eight, inlet openings (13) for supplying a stream of gas in the flow channel (11) in the region of the admission opening (12).

**10.** Device according to one of claims 7 till 9, **characterized in that** a ratio of cross-sectional area of the mixing chamber (10) to cross-sectional area of the flow channel (11) is between 1.05 and 10, preferred between 1.1 and 5, specifically preferred between 1.2 and 2.

**11.** Device according to one of claims 7 till 10, **characterized in that** the transition from the mixing chamber (10) to the flow channel (11) has a conical form.

**12.** Device according to one of claims 7 till 11, **characterized in that** the flow channel (11) is in conical form over its entire length.

**13.** Device according to one of claims 7 till 12, **characterized in that** it further comprises a control member (15) for changing the mass flow of the gas.

**14.** Device according to one of claims 7 till 13, **characterized in that** it further comprises a sensor (19) for detecting spray pattern.

**15.** Device according to one of claims 7 till 14, **characterized in that** it further comprises a control device (21) for adjusting the mass flow of gas based on detected spray pattern.

**Revendications**

**1.** Procédé de fabrication cadencée de pièces moulées contenant une couche de polyuréthane, dans lequel :

> a) les composants réactifs sont d'abord mélangés dans une chambre cylindrique de mélange (10),
> b) le mélange réactif ainsi formé est ensuite amené dans un canal d'écoulement (11) par une ouverture d'entrée (12),
> c) un écoulement de gaz est de plus amené dans le canal d'écoulement (11) dans la zone occupée par l'ouverture d'entrée (12),
> d) le mélange de réactif sortant du canal d'écoulement (11) est pulvérisé sur la surface d'un substrat (18) pour y être durci,
> e) lorsque cette étape est terminée, la chambre de mélange (10) est nettoyée mécaniquement au moyen d'un expulseur (23) mobile axialement dans la chambre de mélange (10), l'expulseur (23) étant déplacé depuis sa position de cycle jusque dans la position de nettoyage et
> f) l'expulseur (23) est ensuite maintenu dans la position de nettoyage jusqu'à ce que le côté frontal (25) de l'expulseur (23) et que le canal d'écoulement (11) aient été nettoyés par l'écoulement de gaz.

**2.** Procédé selon la revendication 1, dans lequel l'écoulement de gaz pénètre dans le canal d'écoulement à une vitesse de 50 à 250 m/s, de préférence de 75 à 200 m/s et de façon particulièrement préférable de 100 à 150 m/s.

**3.** Procédé selon les revendications 1 ou 2, **caractérisé en ce que** le rapport entre les débits massiques de gaz et de mélange réactif $m_G/m_R$ peut être réglé entre 2 : 1 et 1 : 100, de préférence entre 1 : 1 et 1 : 75 et de façon particulièrement préférable entre 1 : 2 et 1 : 50.

**4.** Procédé selon la revendication 3, **caractérisé en ce que** le rapport $m_G/m_R$ est réglable.

**5.** Procédé selon l'une des revendications 1 à 4, **caractérisé en ce que** le canal d'écoulement présente un rapport entre son diamètre et sa longueur de 1 : 1 à 1 : 50, de préférence de 1 : 2 à 1 : 30 et de façon particulièrement préférable de 1 : 3 à 1 : 10.

**6.** Procédé selon l'une des revendications 1 à 5, **caractérisé en ce que** l'application par pulvérisation s'effectue essentiellement en une couche, des pistes voisines de pulvérisation présentant un degré de superposition de 1 % à 40 %, de préférence de 3 % à 30 % et de façon particulièrement préférable de 5 % à 20 %.

**7.** Dispositif de fabrication de pièces moulées revêtues contenant une couche de polyuréthane, le dispositif présentant :

> a) des récipients de réserve (1, 2) et des ensembles de dosage (3, 4) des composants réactifs,
> b) un organe de mélange (9) qui contient une chambre cylindrique de mélange (10) et un expulseur (23) déplaçable axialement dans la chambre de mélange (10),
> c) des conduits de liaison (7, 8) entre les ensembles de dosage (3, 4) et la chambre de mélange (10),
> d) un canal d'écoulement (11) relié hydrauliquement à la chambre de mélange (10) par une ouverture d'entrée (12) et dont le rapport D/L entre le diamètre et la longueur est compris entre 1 : 1 et 1 : 50,
> **caractérisé en ce que**
> e) au moins une ouverture d'entrée (13) qui permet d'amener un écoulement de gaz dans le mélange réactif formé dans la chambre de mélange (10) est disposée dans le canal d'écoulement (11) dans la zone occupée par l'ouverture d'entrée (12).

**8.** Dispositif selon la revendication 7, **caractérisé en ce que** l'ouverture d'entrée (12) est disposée dans le canal d'écoulement (11) essentiellement directement en aval de la chambre de mélange (10).

**9.** Dispositif selon l'une des revendications 7 ou 8, **caractérisé en ce que** de deux à vingt, de préférence de trois à seize et de façon particulièrement préférable de quatre à huit ouvertures d'entrée (13) qui permettent d'amener un écoulement de gaz dans le canal d'écoulement (11) sont disposées dans la zone occupée par l'ouverture d'entrée (12).

**EP 1 960 171 B1**

**10.** Dispositif selon l'une des revendications 7 à 9, **caractérisé en ce que** le rapport entre la superficie de la section transversale de la chambre de mélange (10) et la superficie de la section transversale du canal d'écoulement (11) est compris entre 1,05 et 10, de préférence entre 1,1 et 5 et de façon particulièrement préférable entre 1,2 et 2.

**11.** Dispositif selon l'une des revendications 7 à 10, **caractérisé en ce que** la transition entre la chambre de mélange (10) et le canal d'écoulement (11) a une forme conique.

**12.** Dispositif selon l'une des revendications 7 à 11, **caractérisé en ce que** le canal d'écoulement (11) est conique sur toute sa longueur.

**13.** Dispositif selon l'une des revendications 7 à 12, **caractérisé en ce qu'**il contient en outre un organe de réglage (15) qui permet de modifier le débit massique de gaz.

**14.** Dispositif selon l'une des revendications 7 à 13, **caractérisé en ce qu'**il comporte en outre un détecteur (19) qui détecte le motif de pulvérisation.

**15.** Dispositif selon l'une des revendications 7 à 14, **caractérisé en ce qu'**il contient en outre un dispositif de régulation (21) qui régule le débit massique de gaz en fonction du motif de pulvérisation qui a été détecté.

Fig. 1

Fig. 2

Fig. 3

Fig. 4

Fig. 5

Fig. 6

**IN DER BESCHREIBUNG AUFGEFÜHRTE DOKUMENTE**

**In der Beschreibung aufgeführte Patentdokumente**

- EP 0303305 B1
- DE 9315493 U1

**In der Beschreibung aufgeführte Nicht-Patentliteratur**

- Kunststoff-Handbuch. Carl Hauser Verlag, 1993, vol. 7